# EUROPEAN PATENT SPECIFICATION

(11) **EP 4 010 682 B1**
(45) Date of publication and mention of the grant of the patent: **17.07.2024**
(21) Application number: 20757486.4
(22) Date of filing: 04.08.2020
(51) Int. Cl.: G01N 15/12, G01N 15/14, G01N 15/00, G01N 15/10

(54) **DETECTING AND REPORTING SUBPOPULATIONS OF NEUTROPHILS**
NACHWEIS UND BERICHT VON SUBPOPULATIONEN VON NEUTROPHILEN
DÉTECTION ET SIGNALEMENT DE SOUS-POPULATIONS DE NEUTROPHILES

(30) Priority: 06.08.2019 US 201962883578 P
(43) Date of publication of application: 15.06.2022
(73) Proprietor: Beckman Coulter, Inc., Brea, CA 92821 (US)
(72) Inventor: RAMIREZ, Carlos, Brea, CA 92821 (US); FORTUN, Ana, Brea, CA 92821 (US); AHMED, Bentahar, Brea, CA 92821 (US)
(74) Representative: Maiwald GmbH
(86) International application number: PCT/US2020/044841
(87) International publication number: WO 2021/026123

(56) References cited:
- EP-A2- 2 694 960
- US-A1- 2003 113 925

## Description

### CROSS-REFERENCE TO RELATED APPLICATIONS

This application is related by subject matter to U.S. Patent No. 9,658,215 and U.S. Patent No. 10 222 320. This is related to, and claims the benefit of, provisional patent application 62/883,578, titled "Detecting and Reporting Subpopulations of Neutrophils", filed in the United States Patent Office on August 6, 2019.

### BACKGROUND

Particle analyzers are used to analyze biological cell samples so as to determine the count and/or distribution of one or more types of cells contained in the samples. Particle analyzers include hematology analyzers and flow cytometers. Hematology analyzers and flow cytometers measure and differentiate blood cells of various types by collecting and analyzing signals produced when the cells pass through a small aperture or measurement region that is monitored by one or more sensors. For example, a sample of blood is flowed through a measurement region in which one or more energy sources and associated sensors are configured to detect signals corresponding to various physical characteristics of the cells that pass through. One or more of the signals corresponding to the measurements of a single cell in the measurement region is referred to as a cellular event. Cellular event data for a plurality of cells of a cell sample are then analyzed to determine populations differentiated based upon physical characteristics of the cells.

Measurements of physical properties, such as volume, conductivity, and light scatter, are used to classify cells. For example, Volume, Conductivity and Scatter (VCS) technology from Beckman Coulter is used, among other applications, to classify white blood cells into subgroups or populations. These physical measurements form a multi-dimensional space where cells sharing similar physical properties group into clusters. Each cluster corresponds to a population of a specific type of blood cells.

The enumeration of white blood cells (WBCs, also referred to as leukocytes) is an important tool for detecting pathological conditions such as various forms of infection. The 5-part WBC Differential has for long been an invaluable test in the detection of hematological conditions. The 5-part Differential detects and enumerates the five major subtypes of WBC that are normally found in the peripheral blood, i.e., neutrophils, lymphocytes, monocytes, eosinophils and basophils. However, there can be other types of WBC in intermediate stages of the maturation process. These WBC that are in intermediate stages of the maturation process include blast cells, variant lymph cells, and Early Granulated Cells (EGCs), that are also indicators of hematology disorders. The term EGC refers to a subset of immature myeloid cells mainly composed of promyelocytes, myelocytes, and metamyelocytes. Other cells in intermediate stages of maturation, such as, blast cells and band cells are generally not included in the EGC population.

The elevated presence of EGCs in the peripheral blood might indicate enhanced bone marrow activation. The count of EGCs, for example, can be indicative of sepsis which is a severe form of bacterial infection. In general, an increase in circulating EGCs occurs during bacterial infection. The presence of EGCs indicates increased myeloid cell production due to infection or severe inflammatory disease. EGCs can also be found in patients with leukemia, myelodysplastic syndrome, and myelofibrosis. Thus, rapid and accurate enumeration of the EGCs in a patient's blood sample can be highly desirable for the timely treatment of acute infections, sepsis, and other conditions. Enhancing the routine 5-part WBC Differential test by identifying and enumerating sub-populations of cells may enhance diagnostic capabilities.

In conventional methods of analysis, the presence of EGCs is associated with changes in the shape of a cell event population in a two-dimensional histogram or scattergram. Based on the shape of one or more cell populations, conventional particle analyzers are capable of alerting the end user about the presence of immature or atypical cells, but may be unable to quantify those subpopulations of cells.

EGC enumeration is conventionally done by means of manual blood smear analysis. This process is labor intensive and is highly prone to error due to various factors such as the low number of cells counted and human subjectivity.

Another conventional method of EGC enumeration is based on fluorescence. The WBC are stained with a polymethine dye which stains the RNA and DNA of each cell. EGCs can then be identified apart from mature granulocytes based upon the higher fluorescence due to the larger content of RNA and DNA in the EGCs. However, fluorescence-based technology can be expensive and may not be suitable for relatively low-cost analyzers. In addition, managing labeling reagents adds complexity to the operation of the analyzer, and, depending on the composition of the fluorescent labels, may pose operator or environmental safety concerns. Therefore, there is a need to be able to determine EGC by a non-fluorescent method and instrument.

Still further, another method has been disclosed that measures immature granulocytes on the basis of only DC. However, the accuracy of this measurement might be compromised in cases wherein the volumes of the neutrophil subpopulation, immature granulocyte subpopulation and bands overlap.

Another, more recent method uses light scatter measurements to identify and enumerate early granulocytic cells. EP 2 694 960 A2 discloses detecting and enumerating early granulated cells in blood samples on the basis of their unique aspects of granularity, nuclear lobularity, and/or cell surface structure. The enumerated EGC cells are reported.

Yet another conventional method of EGC enumeration involves flow cytometric analysis using one or more antibodies, such as, for example, the CD16 antibody. Using this method EGCs can be identified based upon the lack of CD16 staining on EGC cells. However, the method involves the use of multiple antibodies to sequentially gate different cell types. Therefore, the flow cytometric methods using antibodies to identify EGCs can be cost prohibitive and can cause changes in the physical characteristics of the cells due to the use of one or more antibodies.

There remains a need for efficient methods and systems to identify and enumerate EGCs in blood samples, to distinguish EGCs from other subpopulations of leukocytes, and/or to distinguish EGCs from other subpopulations of neutrophils.

### BRIEF SUMMARY

Aspects of the invention are as set out in the appended claims.

### BRIEF DESCRIPTION OF THE DRAWINGS

Further features and advantages of the present disclosure, as well as the structure and operation of various aspects thereof, are described in detail below with reference to the accompanying drawings. It is noted that the disclosure is not limited to the specific embodiments described herein. Such embodiments are presented herein for illustrative purposes only. Additional embodiments will be apparent to persons skilled in the relevant art(s) based on the teachings contained herein.
FIG. 1 is an exemplary system according to aspects of the present disclosure.
FIGS. 2A and 2B illustrate exemplary scattergrams of WBC differential analysis based on volume and light scatter. FIG. 2A illustrates a normal sample. FIG. 2B illustrates a sample with EGCs.
FIGS. 3A and 3B illustrate the overlapping of neutrophil and EGC populations. FIG. 3A illustrates an exemplary scattergram based on volume and rotated medium angle light scatter. FIG. 3B illustrates an exemplary scattergram based on volume and conductivity.
FIGS. 4A, 4B, and 4C illustrate using LALS to detect the EGC population, according to aspects of this disclosure. FIG. 4A illustrates an exemplary scattergram with conductivity and LALS. FIG. 4B illustrates an exemplary scattergram with conductivity and a derived measurement that includes LALS. FIG.4Cf illustrates an exemplary scattergram with a first derived measurement that includes LALS and a second derived measurement that includes Opacity(OP).
FIG. 5 illustrates an exemplary cell population in a DC v MALS scattergram.
FIG. 6 illustrates the same cell sample of FIG. 5 in a scattergram with derived measurements according to aspects of this disclosure.
FIG. 7 illustrates an exemplary method of detecting and enumerating EGC according to aspects of this disclosure.
FIG. 8 illustrates an exemplary method of identifying a population of EGC according to aspects of this disclosure.
FIG. 9 shows an exemplary cellular event analyzer and an exemplary, corresponding system according to aspects of this disclosure.
FIG. 10 shows an exemplary display of results from a cellular event analysis in accordance with aspects of this disclosure.
FIG. 11 is a simplified flowchart for reporting a laboratory analysis in accordance with aspects of this disclosure.
FIG. 12 is a simplified flowchart for performing and providing results of early granulated cell (EGC) differentiation.
FIG. 13 is a simplified flowchart for dynamically determining information to include in a report interface by omitting counts which do not satisfy reliability criteria.

### DESCRIPTION

The features and advantages of the present disclosure will become more apparent from the detailed description set forth below when taken in conjunction with the drawings. In the drawings, like reference numbers generally indicate identical, functionally similar, and/or structurally similar elements. Generally, the drawing in which an element first appears is indicated by the leftmost digit(s) in the corresponding reference number.

As noted above, WBCs are often classified into 5 subpopulations. Typical subpopulations are neutrophils, lymphocytes, monocytes, basophils and eosinophils. Each subpopulation has different morphological features, and changes in one or more subpopulations of WBCs can be helpful in diagnosing or ruling out certain medical conditions. However, efficiently distinguishing these subpopulations with automated hematology analyzers has proven challenging. Although the subpopulations have different morphologies, they also have many similarities. Those similarities are even more challenging to overcome when attempting to distinguish second-tier subpopulations of the 5 major subpopulations. For example, in a 5-part differential, the reported count of neutrophils may include EGCs and bands. In some instances, the distinction between EGCs and other neutrophil subpopulations may be clinically significant, and so there remains a need to distinguish these neutrophil subpopulations, and to improve upon the efficiency and accuracy of known methods for automatically distinguishing these neutrophil subpopulations.

Initial attempts to distinguish EGCs have also been troubled by reporting inconsistencies. Different kinds of analyzers or even different modes of analysis using the same analyzer may report WBC subpopulations differently. For example, bands or EGCs may be included or excluded from a neutrophil count. In some instances, EGCs may be included in a neutrophil count and also reported separately. In other instances, EGCs may be excluded from a neutrophil count and not reported separately, or may be excluded from a neutrophil count and reported separately. This puts the onus on laboratory personnel or clinicians to remember what is included or excluded from a reported neutrophil count, and under what conditions. Given the preponderance of different test results and the potential use of different analytical modes and/or different analyzers, this requirement for laboratory personnel or clinicians to know how to read neutrophil reports under different conditions is a significant inefficiency and a source of potential clinical confusion. Further, neutrophils are often reported as a percentage of leukocytes. If EGCs are reported separately, without context, it may be unclear whether the reported value is the percent of EGCs compared to leukocytes or the percent of EGCs compared to neutrophils.

The methods and systems disclosed herein enable the identification and enumeration of EGCs in cell samples by analyzing cellular event data generated by a particle analyzer. This disclosure provides a superior approach to existing techniques in that the present specification does not require any special or expensive dyes, stains, or antibodies to separate the EGCs from the generally overlapping neutrophil population. Further, the reporting techniques described herein may clarify the relationship of neutrophil subpopulations, particularly in systems where different subpopulations might otherwise be presented differently in different contexts.

As used herein, the terms "parameter" and "measurement" are generally used interchangeably. In some aspects of this disclosure, a laser emits a beam of energy that is reflected or deflected from a particle, i.e., a cell, and that energy, or the portion of that energy reflected or deflected at a particular angle from the original beam, is measured as a parameter by one or more detectors. Therefore, it is generally considered that the energy is a measured parameter. Certain parameters are not directly measured, but rather are calculated. By way of specific example, Opacity (OP) and RMALS are calculated parameters from the measured DC and RF for Opacity parameter and MALS and DC for the RMALS parameter.

In some aspects of this disclosure, low angle light scatter (LALS) measurements are used to automatically detect and enumerate EGC populations in blood samples. The enumeration of EGC according to some aspects of this disclosure does not require repeat testing of the sample in the particle detector. The enumerated EGC information can either be incorporated as part of a 5-part Differential test for white blood cells or can be presented separately.

Exemplary environments in which this disclosure may be practiced include particle analyzers such as flow cytometers and hematology analyzers. The DxH^{™} 800 and DxH^{™} 900 hematology analyzers, for example, use a variation of the proprietary Coulter Volume, Conductivity, and Scatter (VCS) technology to interrogate cells inside a measurement region of a particle analyzer. VCS uses at least three independent energy sources that work in concert with each other to interrogate cells: a low frequency direct current (DC) power source to measure volume; a high frequency power source to measure conductivity (OP), and one or more laser light sources to measure scatter. The volume measurement is performed using the Coulter Principle of electrical impedance to physically measure the volume that the entire cell displaces in an isotonic diluent. This method accurately sizes all cell types regardless of their orientation in the light path. Alternating current in the radio frequency (RF) range short circuits the bipolar lipid layer of a cell's membrane, allowing the energy to penetrate the cell. This energy source is used to collect information about cell size and internal structure, including chemical composition and nuclear volume. One or more laser energy sources and multiple-angle light scatter sensors or detectors provide information about a cell's internal structure, granularity, and surface morphology. Light scatter measurements can include upper medium angle light scatter (UMALS) measured, for example, in a range between 20-65 degrees from the axis, lower medium angle light scatter (LMALS) measured, for example, in a range between 10-20 degrees from the axis. The combination of UMALS and LMALS is commonly referred to as MALS, but UMALS and LMALS constitute separate light scatter measurements using adjoining light detectors.

In addition, VCS instruments use the highly accurate DC measurement of volume, to obtain other measurements that are adjusted for cell size from conductivity and scatter. U.S. Pat. No. 5,616,501 (to Rodriguez et al) contains a detailed description of a particle analyzer and the use of VCS technology. While the commercial DxH^{™} hematology analyzers have all VCS technology capabilities, various aspects of VCS may be used independently, or in subcombinations, or in combinations with other technologies, such as fluorescent labeling or cellular imaging (with or without staining) to identify and/or enumerate cells or cell subpopulations. It should be noted that the teachings in this disclosure are not limited to devices using VCS technology or its variants.

Light scatter measurements may include a LALS measurement and/or an axial light loss measurement (ALL or AL2). LALS is measured, for example, in a range between 0-10 degrees from the axis. ALL is measured as the light loss along the axis, for example, at 0-1.0 degrees from the axis. A person of skill in the art understands, however, that the exemplary light scatter angles corresponding to UMALS, LMALS, LALS, and ALL are relative to each other, and can change due to factors such as the configuration of a particle detector, individual characteristics of the particle detector and reagents or other materials mixed with the cell samples.

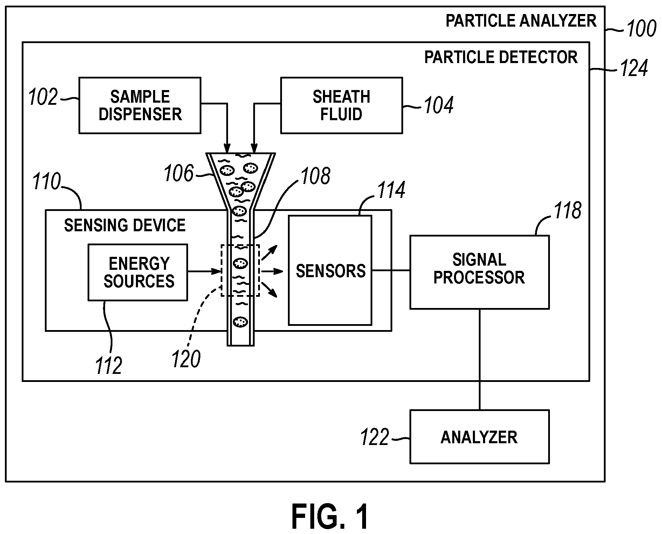

FIG. 1 illustrates a particle analyzer 100 according to aspects of this disclosure. FIG. 1 is exemplary, and particle analyzers can include more or fewer modules, different modules, and different designs than shown in FIG. 1. As shown, particle analyzer 100 includes a particle detector 124 and an analyzer 122. Particle detector 124 includes a particle sample dispenser 102 and a sheath fluid dispenser 104. Sample dispenser 102 includes a particle sample prepared according to the requirements of a desired analysis or test. For example, a sample of blood may be diluted with a diluent to a predetermined degree of cell concentration. The type of diluent and the degree of dilution differ according to the test being run-white blood cell (WBC) analysis requires less dilution than red blood cells (RBC) because the number of WBC in a sample is low compared to RBC. A sheath fluid dispenser 104 holds a sheath fluid such as, for example, saline. The sheath fluid enables the smooth flowing of the particle sample in the particle detector. The particle sample from particle sample dispenser 102 and the sheath fluid from sheath fluid dispenser 104 are injected at a predetermined constant rate. Solution dispenser 106 funnels the particle sample and sheath fluid into a flow cell 108. Flow cell 108 is, in general, a tube of a small diameter designed for a single particle to pass through. The solution in solution dispenser 106 is injected into flow cell 108 at a constant rate through hydrodynamic focusing. Hydrodynamic focusing injects the solution at a constant rate and under sufficient pressure that, in general, the particles appear in single file at constant intervals within flow cell 108. It should be noted that some particle detectors can have a measurement area without a flow cell.

A sensing device 110 is positioned within particle detector 124 such that one or more sensing mediums may be employed to sense particles flowing through measurement region 120. Energy sources 112 and associated sensors 114 are positioned within sensing device 110 substantially transversely to flow cell 108. Energy sources 112 and sensors 114 employ one or more of electrical or optical sensing mediums to detect particles in measurement region 120. For example, a set of energy sources 112 and associated sensors 114 can employ a light measurement to measure the light scatter and light loss characteristics of a cell passing through measurement region 120. Light scatter measurements can include UMALS, LMALS, and LALS. Light loss is measured as the axial light loss (ALL or AL2), i.e., light loss along the axis, for example, at 0-1.0 degrees from the axis. Other sets of energy sources 112 and sensors 114 can employ a DC measurement to measure the volume (V) of a cell, and an RF measurement to measure the conductivity (OP) characteristics of a cell. Energy sources 112 and sensors 114 can also include other mediums, such as, for example, an acoustic medium where ultrasound is used to detect various characteristics of a cell in measurement region 120.

Sensors 114 are coupled to a signal processor 118. Sensors 114 convert detected electrical or optical measurements to corresponding electrical signal pulses that are processed in signal processor 118. For each particle passing through measurement region 120, electrical signal pulses corresponding to a sequence of measurements are collected, for example, in signal processor 118. From these electrical signal pulses, a signal is formed that is illustrative of the measurements captured for one measurement parameter while one particle is flowing through the measurement region. The input to the signal processor 118 can be analog or digital signal. One or more analog to digital converters (ADC) can be used to convert the analog signals to digital before, during, or after the processing in the signal processor 118. The duration covered by the signal can commence upon the entry of the particle into the measurement region to its exit from the measurement region. In embodiments of the present specification, signal processor 118 may perform additional processing of each signal to derive one or more measurement parameters describing the particle that was detected.

The detection of a particle within measurement region 120 is referred to as an event or cellular event. Signal processor 118 analyzes the derived signal corresponding to each detected particle flowing through measurement region 120 to determine a corresponding event. Detected events are then transmitted to analyzer 122. Analyzer 122 is coupled to signal processor 118 to receive event data. Analyzer 122 can be located in a computer coupled to the particle detector. It should be noted that analyzer 122 can either be located on-board the particle analyzer 100 comprising particle detector 124, or separately being coupled to particle analyzer 100 through a communication infrastructure.

Signal generation and event detection may be performed separately for each active electrical or optical measurement. Analyzer 122 can receive event data corresponding to each active measurement. Analyzer 122 can then analyze the received event data to determine one or more counts, cell populations, or other characteristic corresponding to the cell or to the cell population(s). In embodiments of the present specification, analyzer 122 can cause the display of scatter plots, histograms, or other graphical and/or textual illustrations of the received events. The scatter plots, histograms, and/or other graphical representations can be multi-dimensional. Determining the one or more cell counts, cell populations, or other characteristics of the cell or the cell population(s) may involve analyzing individual cellular event signal(s) (e.g., LALS), analyzing combinations of cellular event signal(s) (e.g., LALS and MALS or LALS, MALS and OP), or calculating a count or characteristic based on other counts or characteristics. For example, if neutrophils are sub-categorized only as EGCs and mNEs (in which case "mNEs" would potentially include bands, degranulated neutrophils, and other miscellaneous cells), the analyzer may count neutrophils and EGCs and calculate mNEs as neutrophils minus EGCs. Similarly, the analyze may count neutrophils and mNEs and report EGCs as neutrophils minus mNEs, or count mNEs and EGCs and add them to report total neutrophils. Similar mathematics may be employed to infer counts if additional sub-populations or sub-categories of neutrophils are obtained from cellular event signals (e.g., bands, degranulated neutrophils, other aged neutrophils, etc.).

"Sensitivity" and "specificity" are statistical measures of the performance of a binary classification test. Sensitivity measures the proportion of actual positives which are correctly identified. Specificity measures the proportion of negatives which are correctly identified. A specificity of 100% means that the test recognizes all actual negatives. A sensitivity of 100% means that the test recognizes all actual positives. Thus, in contrast to a high specificity test, negative results in a high sensitivity test are used to rule out the disease. A positive result in a high specificity test can confirm the presence of disease. However, specificity alone does not sufficiently indicate accuracy of the test to recognize positive cases. Knowledge of sensitivity is also required. For any test, there is usually a trade-off between these measurements. For example, in a diagnostic assay in which one is testing for people who have a certain condition, the assay may be set to overlook a certain percentage of sick people who are correctly identified as having the condition (low specificity), in order to reduce the risk of missing the percentage of healthy people who are correctly identified as not having the condition (high sensitivity). This trade-off can be represented graphically using a receiver operating characteristic (ROC) curve.

The "accuracy" of a measurement system is the degree of closeness of measurements of a quantity to its actual (true) value.

In some aspects, a method for enumerating EGCs as disclosed is at least about 80% accurate, and more particularly at least about 85% accurate. In preferred embodiments, a method for enumerating EGCs as disclosed is at least about 90% accurate.

In some aspects, a method for enumerating EGCs as disclosed has at least about 85% sensitivity, more particularly at least about 90% sensitivity, and even more particularly at least about 95% sensitivity. In some aspects, a method for enumerating EGCs as disclosed has at least about 80% specificity, and more particularly at least about 85% specificity. In preferred aspects, a method for enumerating EGCs as disclosed has at least about 90% specificity.

### Use of LALS to Identify and Enumerate EGC

EGCs are precursors to mature neutrophils. EGCs can be differentiated from other cell types, including specifically neutrophils, on the basis of their unique aspects of granularity, nuclear lobularity, and/or cell surface structure. These unique aspects can be measured and used as basis to identify the EGC population. In some aspects, LALS can be used to discern the degree of a cell's granularity, nuclear lobularity, and/or cell surface structure. The LALS parameter is highly sensitive to subtle changes in granularity, lobularity and/or surface features of EGCs as compared to mature WBCs. However, it is also understood that LALS can be combined with other parameters for specificity and sensitivity in enumeration of EGCs. More particularly, EGCs could be measured using a non-fluorescent method and instrument using LALS and at least one measurement from the group of forward light scatter, side scatter, axial light loss, DC, RF and Opacity. Still further, the forward scatter light is selected from UMALS, LMALS, MALS. Of course, fluorescent methods could be used, alone or in combination with other methods, to enumerate EGCs. However, as described above, non-fluorescent methods may present certain advantages in terms of cost and/or ease of use.

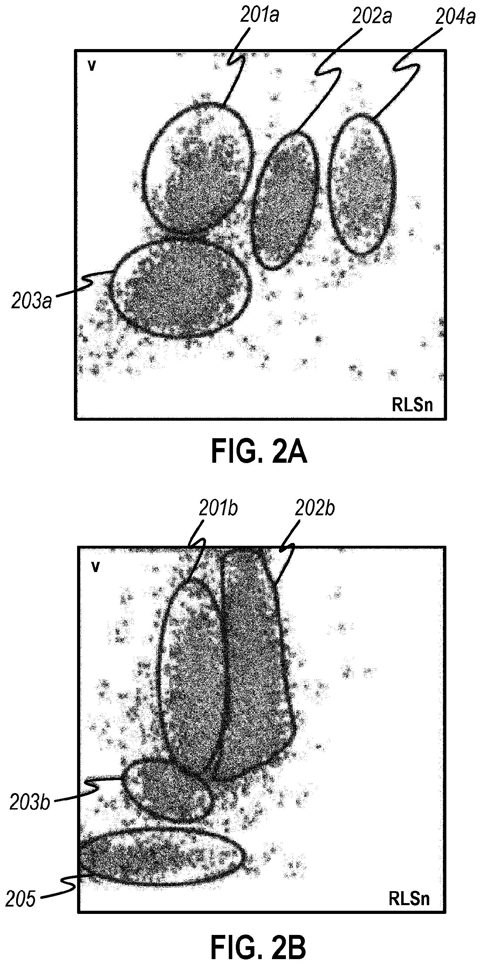

FIGS. 2a and 2b illustrate a WBC differential scattergram from a normal blood sample (FIG. 2a) and a blood sample containing EGCs (FIG. 2b). Populations 202a and 202b represent the neutrophil populations respectively of the normal sample and the sample containing EGCs. The shape of populations 202b is elongated along the volume axis when compared to the shape of population 202a. Populations 201a and 201b represent monocytes, populations 203a and 203b represent lymphocytes, population 204 represents eosinophils, and population 205 represent unlysed RBCs. Many conventional methods identify the presence of EGC based on the elongation of the shape of the neutrophil population, such as that shown in FIG. 2b. FIGS. 19 and 20 of U.S. Pat. No. 5,125,737 (to Rodriguez et al), for example, illustrate the elongation of the shape of the neutrophil population along the volume or DC axis in scattergrams respectively mapping DC vs. OP and DC vs. RMALS. RMALS is rotated medium angle light scatter is typically calculated as log(UMALS+LMALS)/DC.

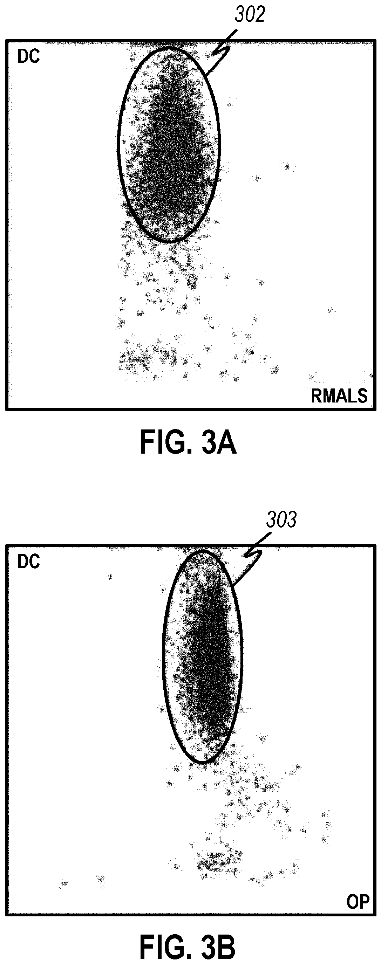

FIGS. 3a and 3b illustrate, respectively, DC vs. RMALS and DC vs. OP scattergrams of another blood sample. The blood sample illustrated in FIGS. 3a and 3b includes a manual reference of 62.25% segmented neutrophils, 12.75% bands, 3% metamyelocytes, and 0.75% myelocytes. In both scattergrams, as seen in clusters 302 and 303, the EGC population cannot be separately identified from the neutrophil population. Therefore, although the elongation of the shape of the neutrophil population can be used as an indicator as to the presence of EGC in the blood sample, the scattergrams based upon DC, RMALS, and OP, as used conventionally, do not separately identify an EGC population and/or enumerate the EGC.

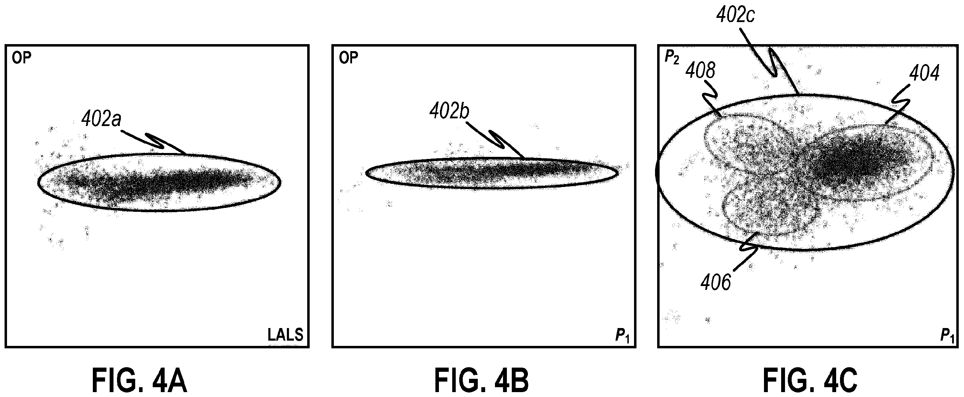

FIG. 4a is an illustration of a scattergram mapping OP vs. LALS in accordance with an embodiment of the present specification. Cluster 402 illustrates in a scattergram of OP vs. LALS, the same cellular events shown in FIGS. 3a and 3b. The elongation of the shape of the population 402 along the LALS axis enables the flagging of the sample for the presence of EGC.

Some embodiments of the present specification use LALS to identify EGC populations. Described below are embodiments in which LALS is combined with other parameters, such as MALS, ALL, OP and/or DC, to identify and enumerate EGC populations. LALS can be combined with other parameters and/or derived parameters including LALS derivatives to identify the EGC population. It is understood that LALS can be used according to various other combinations of parameters or derived parameters to identify and enumerate EGC based upon the teachings in this disclosure. The present specification, as previously mentioned, is not limited solely to the use of LALS to identify and enumerate EGCs because the LALS parameter is only one way of detecting the granularity, lobularity, and/or cell surface features of EGCs. These cell features are what allowed the present inventors to discern the EGCs from their closely overlapping neutrophil populations.

### Combining LALS with MALS to Identify and Enumerate EGC

According to another embodiment of the present specification, LALS can be used with one or more of MALS and DC and RF to identify and enumerate EGC. According to an embodiment, the LALS is used with MALS and DC. In a further embodiment, OP can be used to more clearly differentiate the EGC population from other cell populations such as neutrophils. A still further embodiment uses LALS, MALS, OP, and DC in constructing derived parameters to differentiate the EGCs.

It is understood that derivative functions are known ways to enhance subtle difference in closely related populations. The selection of a derivative function and the attendant variables or additional parameters is well within the level of skill for a person working in this field. In the Figures, OP, RLS, F1, F2, P1 and P2 are derived functions.

In one embodiment, a derived parameter which incorporates LALS and DC to differentiate EGCs from neutrophils based on the distinctive nuclear lobularity and surface structure properties of EGCs and neutrophils. EGCs have lower LALS compared to neutrophils. In addition, the DC measurement is utilized in the derived measurement to increase the separation between EGCs and neutrophils based upon the characteristic that EGCs are usually larger in size than neutrophils. For example, FIG. 19 of U.S. Pat. No. 5,125,737 illustrates that EGCs have a larger volume than neutrophils.

In a further embodiment, a derived measurement can incorporate OP (which is a function of RF and DC) to increase the separation of EGCs from neutrophils. EGCs have lower OP as compared to neutrophils.

In certain embodiments, the derived parameter can also incorporate MALS. MALS contributes to increase the separation between EGCs and neutrophils by sensing subtle structural differences at medium angle of light scatter. However, as seen in FIG. 3a, MALS alone cannot achieve a distinctive separation between the EGC and neutrophil populations.

FIGS. 4b and 4c show the cell sample of FIG. 4a when derived parameters are incorporated to create scattergrams. FIG. 4b shows the elongation of the neutrophil population 402b along the P1 axis. FIG. 4c shows the spreading of the neutrophil population 402c relative to the P2 axis, when that derived measurement is introduced. The final result of applying the exemplary embodiments to a blood sample, as shown in FIG. 4c, can yield a scattergram in which EGCs can be distinctly recognized apart from neutrophils. In FIG. 4c, the EGC population 406, is sufficiently distinct from the neutrophil population 404 and undefined population 408. In the illustrated scattergram, the EGC population 406 accounts for 8.8% of the WBC population, and the undefined population 408 accounts for 7.8% of the WBC population. The EGC population appears to be almost entirely comprised of metamyelocytes, myelocytes, and promyelocytes. In some instances, a small percentage of myeloid blast cells in their transition to the promyelocyte stage can be included in the EGC population. The undefined population appears to comprise of degranulated neutrophils, aged neutrophils, and bands.

In arriving at the derived parameters of the disclosed embodiments, it is understood that appropriate coefficient values can be a combination of coefficients that yield a substantially optimal separation among the populations of a cell sample. The selection of coefficient values can be dynamically calculated. For example, according to an embodiment, the coefficient values can be repetitively recalibrated until a predetermined set of thresholds are met regarding the separation between cell populations mapped on a scattergram.

### Combining LALS with ALL to Identify EGC

In another embodiment of the present specification LALS can be considered together with the ALL measurement. The magnitude of the ALL of a cell is representative of its surface properties and absorbance characteristics. U.S. Pat. No. 7 008 792 provides a description of ALL measurement as part of a method to enumerate NRBCs.

The inventors observed that LALS and ALL parameters move in opposite directions for EGCs and neutrophils. Therefore, according to an embodiment of the present specification, a derived measurement based upon LALS and ALL, in particular the difference between LALS and ALL, is created. Considering the difference between LALS and ALL contributes to increasing the separation between the EGC and neutrophil populations.

The inventors also observed that, in general, EGCs exhibit higher DC and lower OP parameters as compared to neutrophils. Thus, according to an embodiment of the present specification, a derived measurement based upon the difference between OP and DC is considered to increase the separation of the EGC population from the neutrophil population.

Additional translation, rotation, and scaling can be performed on the initial derived parameters in order to arrive at an optimized positioning of the EGC and neutrophil populations.

Intermediate derived parameters can further be stretched and scaled to occupy the desired display area. The stretching and scaling contribute to increasing the separation among the populations so that automatic gating and enumeration can be more accurately accomplished.

The derived parameters can be used to generate histograms, scattergrams, and/or other graphical displays in which the EGC and neutrophil populations are separated sufficiently such that automated enumeration of the respective populations can be achieved.

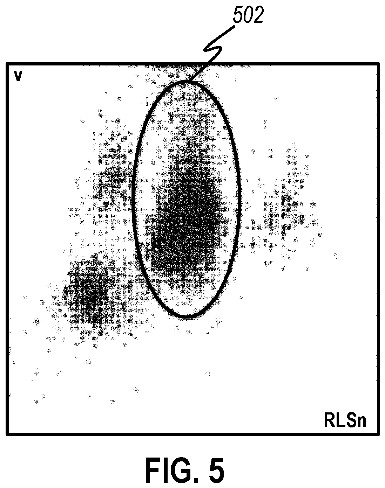

FIG. 5 illustrates a neutrophil population 502 that includes EGC in a conventional DC vs. MALS scattergram. As illustrated, the conventional DC vs. MALS scattergram does not sufficiently separate the EGC population from the neutrophil population.

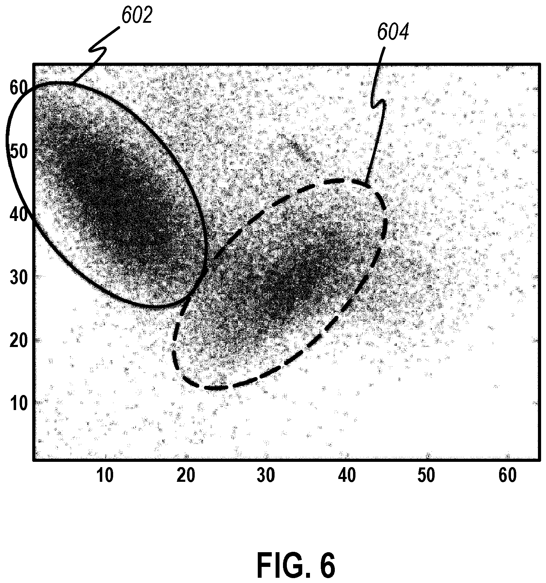

FIG. 6 illustrates the same cell sample as shown in FIG. 5, in a scattergram plotting the derived parameters according to an embodiment of the present specification. In FIG. 6, the EGC population 604 is clearly separated from the neutrophil population 602.

### Method to Identify and Enumerate EGC using LALS

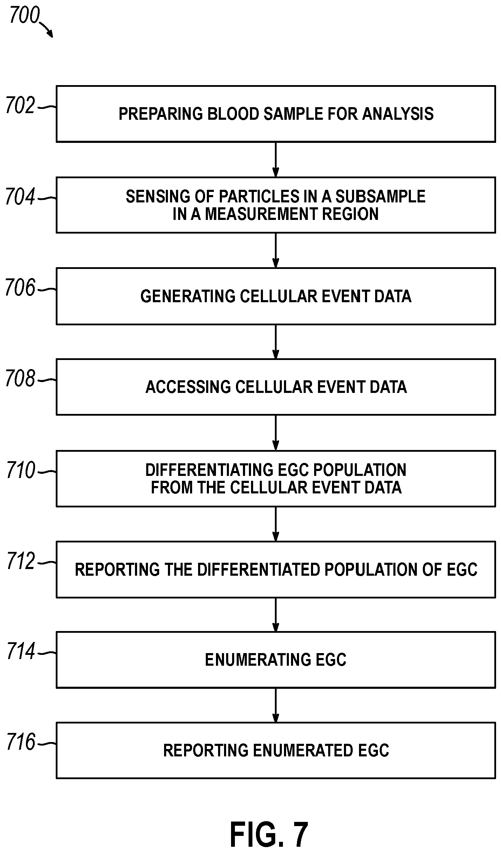

FIG. 7 illustrates a method 700 to identify and enumerate EGCs in a blood sample according to aspects of this disclosure. Method 700 can be implemented in a particle detector and analyzer such as that illustrated in FIG. 1.

In step 702, a blood sample is prepared for analysis. For example, and without loss of generality, in hematology analysis a whole blood sample can be lysed to remove red blood cells prior to a 5-part Differential test for white blood cells. The preparation step can also include adding a diluent to the sample and optionally a sheath fluid to facilitate the flowing of the sample through a measurement region. The prepared particle sample is then injected into a path including the measurement region at a substantially constant rate using a process such as hydrodynamic focusing to ensure sufficient pressure to move the particles in a single file through the path.

In step 704, the cells of the blood sample are subjected to measurement in a measurement region of the particle analyzer. The cells in a diluent, and optionally in a sheath fluid, pass one by one through a measurement region. During the time interval that a cell is in the measurement region, one or more of a plurality of energy sources and sensors may operate to subject the cell to interrogation and to collect the signals generated by the respective interrogations. As described above, according to an embodiment of the present specification a plurality of energy sources and corresponding sensors operate to collect measurement signals for a LALS measurement and one or more of DC, OP, MALS, and ALL parameters.

In step 706, cellular event data corresponding to the collected measurement signals are generated. For example, the cellular event data for a cell can comprise data representing all the parameters of that cell during the interval in which that cell passed through the measurement region. Generating cellular event data can include the generation of electrical signals for optical, RF and other signals detected at the various sensors.

In step 708, the cellular event data is accessed, for example, by an analyzer component. According to an embodiment, some or all of the processing of steps 708-716 can be performed on a real-time or near real-time manner as the cells are measured in the particle detector. According to another embodiment, processing of steps 708-716 can be performed on stored measurement data which have been generated previously by the particle detector.

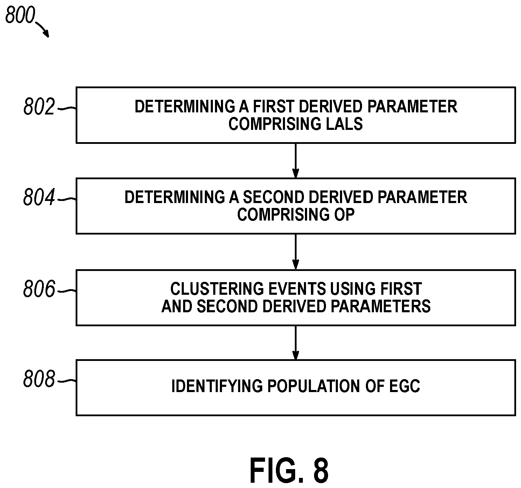

In step 710, a population of EGC is differentiated from the cellular event data according to an embodiment of the present specification. The differentiation of the EGC population is further described below in relation to FIG. 8.

In step 712, the differentiated population of EGC can be reported. According to an embodiment, reporting includes the display and/or printed output of one or more cell populations in one or more histograms, scattergrams, or other graphic and/or textual form of display. According to another embodiment, reporting includes writing the various cell population data to a computer readable storage medium in order that that stored information is available for later retrieval and analysis.

In step 714, the EGCs are enumerated. After the EGC population is separated from the rest of the cell populations including the neutrophil population, the EGC can be counted. Counting of the EGC can be based on counting individual cellular events that fall within an area, gating the cell events in an area, and/or estimating the cellular events in an area.

In step 716, the enumerated EGC are reported. The enumerated EGC can be reported as an absolute count and/or as a percentage of the total white blood cell count. The enumerated EGC can also be reported as a percentage and/or fraction of any other cell population, such as, for example, neutrophils. As in the case of reporting the differentiated EGC population, the reporting can include display, printed output, and/or storing to a computer readable medium. The computer readable medium may be non-transitory.

FIG. 8 illustrates a method 800 to differentiate the EGC population from other cellular populations of the cell sample.

In step 802, a first derived measurement comprising LALS is created. According to an embodiment, a first derived parameter comprises the LALS measurement and a DC measurement.

In step 804, a second derived measurement comprising OP is created. According to an embodiment, a second derived parameter comprises the OP measurement and an MALS measurement.

In step 806, clustering of cellular events is performed. According to an embodiment, a scattergram having the first measurement as one axis, and the second measurement as another axis is created. The clustering of cell populations can be performed manually and/or automatically. The clustering can include iteratively calibrating the coefficients and/or measurement terms until selected cell populations are separated by at least a predetermined threshold distance. The clustering step can also include gating one or more cell populations.

In step 808 the population of EGC is identified based upon the clustering performed in the previous step. The cluster of EGC can be differentiated from the cluster of neutrophils based on the first and second derived parameters as shown in FIG. 4c.

In other aspects, the first and second derived parameters can be created in steps 802 and 804. The first derived measurement accordingly can include LALS and MALS parameters. The second derived parameter can include DC and OP parameters. According to this embodiment, clustering in step 806 can include creating a scattergram with an axis based on the first and second derived parameters.

### Other Examples

The identification and/or enumeration of immature granulocytes may be based on LALS and two or more parameters. Scattergrams, histograms, and/or other graphs types in two or more dimensions can be used in the differentiation and enumeration of the EGC population. For example, an embodiment can include the generation of a three-dimensional surface image based on derived parameters and another physical or derived measurement, and the EGC population can be identified and enumerated based on the positions of the corresponding cell events in the three-dimensional surface.

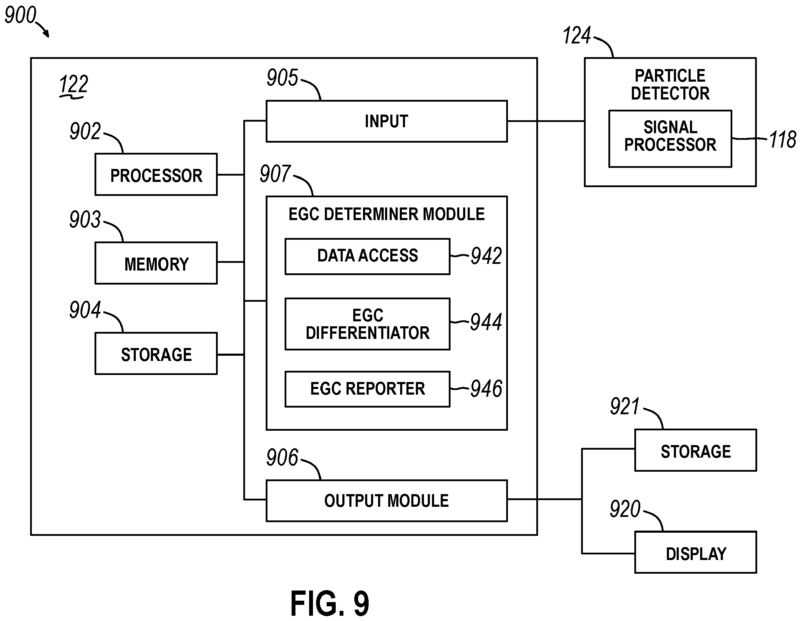

As shown in FIG. 9, system 900 includes a particle detector 124 coupled to an analyzer 122. Analyzer 122 may also be coupled to a display 920 and storage 921. Storage 921 may comprise non-transitory and/or tangible, computer-readable media. Particle detector 124 detects particle events using one or more measurement parameters and includes signal processor 118 that processes the detected measurement parameters to construct a signal for each particle event representing the duration of that particle in a measurement region. Signal processor 118, as noted above, generates cell events corresponding to the measurement of respective cells within the measurement region. Signal processor 118 can perform processing of the received signals to optimize the generation of cell events, for example, by reducing the noise in the received signals. The instructions for assembling the signal corresponding to the duration of a particle in the measurement region and the determining of the parameters corresponding to that signal can be implemented in any suitable programming language including a hardware description language (HDL), Assembly, C and C++, and may include one or more of hardware, firmware, or software components.

As described with respect to FIG. 1 above, analyzer 122 may either be located within particle analyzer 100 or be located separately coupled to particle detector 124 through a communications medium, such as, but not limited to, wired or wireless connections, directly or through one or more intermediary devices. If one or more intermediary devices are used, each device may be physically coupled to particle detector 124 or may be coupled to particle detector 124 through a wireless communication medium, such as WIFI, cellular telephony transmission, or the like. Analyzer 122 receives cell event data corresponding to each particle detected by particle detector 124. The event data can include, among other things, parameters for LALS, OP, DC, and MALS.

Analyzer 122 includes components including a processor 902, a memory device 903, a storage device 904, an input device 905, an output device 906, an EGC determiner module 907 and a communications infrastructure 908. Processor 902 can be any microprocessor or other processor capable of executing processing instructions. Memory device 903 can include a random access memory. Storage device 904 includes a computer readable persistent storage medium such as a flash memory or hard disk. Processor 902 executes the instructions for receiving event data from particle analyzer, processing the received data and outputting the processed results data. Memory device 903 and storage device 904, provides any temporary or permanent memory and storage requirements of processor 902. Communication infrastructure 908 interconnects components of analyzer 122 to each other, and may include a communications medium, including but not limited to a peripheral component interconnect (PCI) bus, Extended Industry Standard Architecture (EISA) bus, Ethernet and/or WIFI. Input device 905 can include connectivity to particle analyzer 100 through communication infrastructure 908 and the capability to receive data including event data from particle analyzer 100.

EGC determiner module 907 includes the functionality to process the cell event data particle detector 124 to identify and enumerate EGC populations in the blood sample. For example, EGC determiner module 907 can include the instructions or a computer program to implement steps 708-716 of method 700. EGC determiner module 907 can comprise of a data access module 942, an EGC differentiator module 944, and an EGC reporter module 946. The data access module 942 can access the cellular event data received from the particle detector. Accessing the data can involve accessing a storage device to retrieve previously stored cell event data or receiving cell event data (real-time or delayed) from a particle detector. The EGC differentiator module 944 can include the functionality to identify and enumerate the EGC population, for example, as described above in relation to steps 710 and 714 of method 700. The EGC reporter module can include the functionality to report the EGC information, for example, as described above in relation to steps 712 and 716 of method 700.

EGC determiner module 907 can be implemented in any suitable programming language including a hardware description language (HDL), Assembly, C and C++, and may include one or more of hardware, firmware, or software components. The instructions and/or computer program implementing the EGC determiner module 907 can, for example, be stored in computer readable storage medium 904.

Output module 906 includes the functionality to handle the cell population information including the EGC population information determined in the EGC determiner module 907 in a manner appropriate for the application. In one embodiment, output module 906 can generate one or more graphs according to preconfigured graph settings to display the differentiated cell populations determined in processing modules including EGC determiner module 907.

Output module 906 is coupled using a communications infrastructure 908 to display 920 and/or storage device 921. The results data from output module 906 is transmitted to display 920 to be displayed and analyzed by an operator. For example, display 920 may illustrate the results data in the form of a histogram, scattergram, or other form of graphic and/or textual display. In another embodiment, the results data may be stored in an external storage device 921 for subsequent processing and analysis.

### EXAMPLES

The following non-limiting examples are provided for illustrative purposes only in order to facilitate a more complete understanding of representative embodiments now contemplated. These examples should not be construed to limit any of the embodiments described in the present specification, including those pertaining to the methods, systems, and/or apparatus for identifying and/or enumerating early granulocyte cells. The scope of the invention is defined by the appended set of claims.

### Example 1

An evaluation of the enumeration of EGCs versus a reference 400 cell manual differential on a set of 1536 unique samples collected at seven different sites is shown below in Table 1. The correlation coefficient r was determined by comparing EGC % against the sum of promyelocytes %, myelocytes % and metamyelocytes %. The positive criterion used for the calculation of the area under the ROC curve was the sum of promyelocytes %, myelocytes % and metamyelocytes % being greater than or equal to 1%.

In the above example, 502 of the 1536 samples were scored by trained hematology technicians as containing EGCs. The same samples were then analyzed using DxH800 instrument programmed with the EGC detection protocol of the present specification. The correlation coefficient (r) was determined as a function of the number of samples scored by the instrument as containing EGCs in relation to the number of samples scored by the trained technicians.

**TABLE 1**

| Statistical Analysts EGC to Manual Reference Differential | | | | | | |
|---|---|---|---|---|---|---|
| Samples | Sample meeting positive criteria | Corre- lation coeffi-cient (r) | Area Under ROC Curve | Sen-si-tivi-ty | Spe-cificity | Criterion for Sensitivity and Specificity |
| 1538 | 502 | 0.87 | 0.89 | 84.5 | 80.8 | >0.52 |

Sensitivity is the ratio of true positive EGCs over true positive EGCs and false negative counts. Specificity, on the other hand, is the ratio of true negative EGCs over true negative EGCs and false positive counts. The area under ROC curve (receiver operating curve) is a measure of the accuracy of the analytical approach combining the sensitivity and the specificity of the EGC enumeration method. The criterion for listed sensitivity and specificity reflects the sliding scale of values trading sensitivity for specificity and vice versa. Thus, for example, a criterion of 1.0 would be where the specificity has been increased at the cost of a decrease in sensitivity. The optimal value for a particular application can be determined by a person of ordinary skill in the art with routine effort.

A similar evaluation on a set of 315 samples collected using flow cytometry CD16 marker as a reference on two different sites provided the results show in Table 2. CD16 is a marker associated with neutrophils, but not EGCs. Thus, labeled CD16 antibodies can be used to gate neutrophils and separate them from the EGC population, which generally appears in a closely overlapping region of a scattergram to the neutrophil population. Less mature cells have less light scatter than mature cells. Thus, using a combination of CD16 antibodies and light scatter, EGCs populations can be gated. Using this method, 315 samples were screened and 164 of the samples were identified as containing EGCs. When the CD16 gating analyses approach was compared to the analytical method of the present specification, the present specification provided the results set forth in Table 2.

**TABLE 2**

| Statistical Analysis EGG to Flow Cytometry CD16 | | | | | | |
|---|---|---|---|---|---|---|
| Samples | Samples meeting positive criteria | Correlation coeficient (r) | Area Under ROC Curve | Sensitivity | Specificity | Criterion for Sensitivity and Specificity |
| 315 | 164 | 0.90 | 0.90 | 82.3 | 80.8 | >0.50 |

Therefore, the present method has also demonstrated that the presence of cells with higher or lower levels of immaturity, such as blasts or juvenile Neutrophils (i.e., bands), has no significant impact on accuracy.

With conventional analyzers, neutrophil subpopulations may be reported in inconsistent or confusing formats that require significant knowledge for laboratory personnel and/or a clinician to properly interpret. For example, in some commercial systems, an analyzer may run in two or more modes. One of the modes may be a 5-part differential that does not characterize sub-populations of neutrophils. In such a 5-part differential mode, a count of neutrophils is reported that includes EGCs. The same analyzer may also run a sub-categorization mode (sometimes referred to commercially as a 6-part differential), which may report a count of neutrophils which excludes EGCs, and separately report EGCs. In this scenario, the same analyzer produces reports which count "neutrophils" differently in different reports, sometimes including EGCs and sometimes excluding EGCs. Systems of this type may have separate modes because they use different reagents or fluorescent labels, and users may not wish to incur additional costs for additional reagents, or increased sample processing times, to enumerate EGCs if an EGC count has not been specifically ordered. In this regard, a light scatter or VCS-like approach may be preferred, since no additional reagents are required to enumerate EGCs and the additional computational processing time to identify EGCs is trivial.

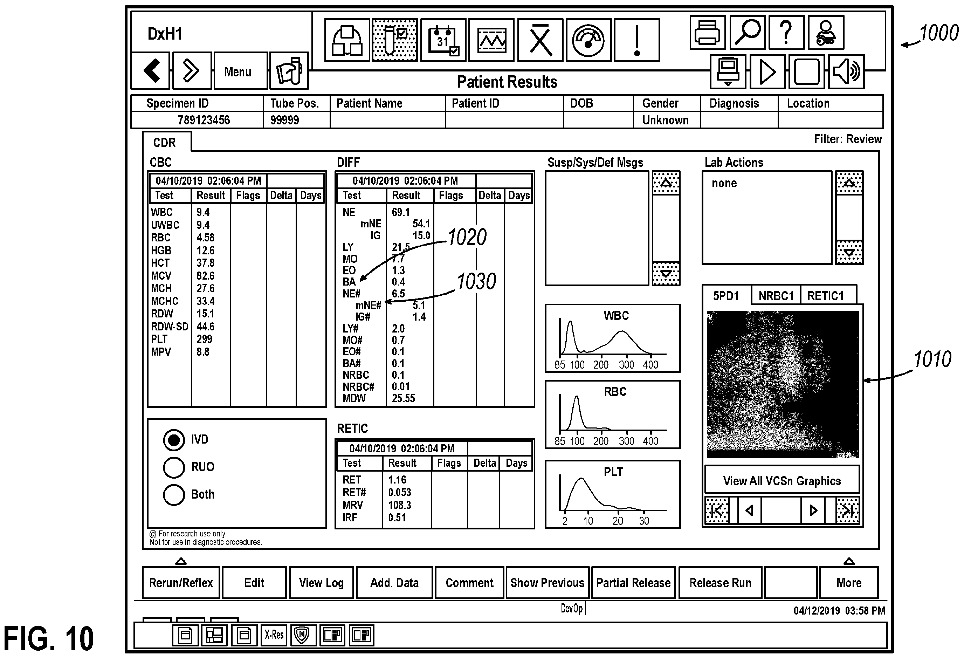

FIG. 10 presents the results of an exemplary method for reporting neutrophil subpopulations in accordance with aspects of this disclosure. Without regard to which cellular event(s) were used to identify EGCs, a user-readable display 1000 may present a visual indication 1010 of the leukocyte population, or the neutrophil population, or both, which provides context for the reported values and may give laboratory personnel and/or a clinician an intuitive sense of the relative size of the EGC population. In some aspects, a user-readable display may include a report which uses the term "neutrophils" consistently across different analyzers and/or modes. For example, analyzers within a particular commercial family that provide a 5-part differential may use "neutrophils" in the same sense as another analyzer within the same commercial family that provides a so-called 6-part differential. For example, all neutrophil counts may include EGCs. In other aspects, all neutrophil counts may exclude EGCs. In some aspects, the report may further distinguish between neutrophils and subpopulations of neutrophils. For example, as shown in FIG. 10, a neutrophil value may be presented with sub-values indented 1030 to emphasize that the sub-values roll into the neutrophil value. Alternatively, neutrophil sub-population values could be presented, indented or without indents, with a total neutrophil count shown as a sum at the end, either indented or un-indented relative to the sub-population. In some aspects, a neutrophil count which includes any enumerated neutrophil subpopulations may be marked by words or symbols (e.g., total, sum, =, etc.) as a conglomeration of the subpopulation counts. These displays may be selected independently of the process by which the counts were determined. For example, the neutrophil count may be presented as a sum (e.g., total, sum, =, etc.) even if the neutrophil count was based on direct observation of cellular events, and one or more subpopulations were enumerated by calculation (e.g., by inferring the count of a sub-population by excluding other, directly observed counts). In other aspects the display format may correspond to the process by which the counts were determined, with different ordering or different indentation or labeling for counts which were derived directly from cellular event analysis compared to counts which were derived by calculation.

To help maintain clarity, one or more parameters may be reported which are not necessarily of known clinical utility. For example, EGCs may be reported coupled with mNEs, where mNEs include several sub-populations of neutrophils, such as bands, mature neutrophils, aged neutrophils, degranulated cells, etc. This particular sub-group of mNEs may have no particular clinical significance but may be reported to provide context for EGCs. As such a report may include, at a first indentation level 1020, a count for neutrophils (NE), at a second indentation level 1030, a count for EGCs, and at a second indentation level 1030, a count for mNEs. At a quick glance, it would be reasonably apparent that any cell that would otherwise be counted as a neutrophil has been categorized as either an EGC or an mNE, and that the EGCs and mNEs sum to the total of all NE. In fact, mNE may be calculated as NE - EGC = mNE. If desired, mNE could also be further sub-categorized, possibly using a third indentation level for one or more of bands, mature NE, degranulated cell, aged NE, and other. Of course, the particular labels are not critical. As used herein, mNE refers generally to "mature" neutrophils, including bands, which are sometimes referred to as "juvenile" neutrophils (to distinguish them from EGCs, which are also known as immature granulocytes). But any desired label could be used, such as non-EGC, miscNE, other, etc., and, outside this disclosure, mNE could be used to refer to a different subpopulation of NEs or a different combination of subpopulations of NEs. Rather, the concept of using structured reporting to clarify what is being reported and maintain consistency between 5-part differentials and so-called 6-part differentials is exemplified using these illustrative labels.

Maintaining a summary report of NE also simplifies local decision rule implementation. Most commercial analyzers have pre-set flags and/or alerts which indicate that something in the analysis raises questions about one or more of the cell or cell population characteristics determined by the analyzer. These may include known indications of bubbles or debris in the system, for example, counts which are possible but unlikely, or relative counts or parameters for different cell populations that are improbable or impossible in combination with one another. Similarly, a particular laboratory or institution (which may include networks of laboratories at different locations or different facilities) may establish local decision rules that define actions the analyzer should take under particular circumstances. For example, cell or cell population parameters beyond a particular threshold may be flagged for review by a laboratory technician before they are forwarded to a researcher or clinician. As another example, cell or cell population parameters within particular thresholds may be released to a researcher or clinician without review by a laboratory technician. These local decision rules are complicated when the same parameter name is used to refer to two or more different measures, such as using NE to refer to both all neutrophils and only mature neutrophils depending on which analyzer is used or which mode an analyzer is operated in. These complications increase the likelihood of logic or software errors when establishing local decision rules, because the rules have to account for multiple possibilities (e.g., analyzer ID, analyzer mode, and parameter value) instead of a single possibility (e.g., parameter value). If the decision rules fail to account for all variables, potentially erroneous results might not be flagged for review, e.g., if a total neutrophil count appears to be normal, but only because EGCs were excluded from the "total" count, or correct results may be unnecessarily flagged, e.g., if a total neutrophil count appears to be abnormally high because EGCs were included. Unnecessary flags consume precious time and effort from a laboratory technician, increase the cost of a routine blood analysis, and can delay the processing of the sample(s) unnecessarily flagged for review.

Similarly, separating NE reporting from sub-population reporting may decrease flags for technician review. Sub-populations of neutrophils are cells in various stages of development, and they share many features. Accordingly, sub-categorizing neutrophils is challenging with any currently available cellular analysis technology. Even manual smears do not have ideal reproducibility when sub-categorizing neutrophils, within or between operators. As such, it should be expected that sub-categories of neutrophils will generate more flags for laboratory technician review than counts of neutrophils generally. By consistently separating the two parameters, the analyzer itself can bypass a flag for human review if no sub-categorization of neutrophils is needed for a particular sample, possibly by suppressing unneeded results that would otherwise be flagged for review. The analyzer can do this by comparing the sample ID to a test order entered into the analyzer or, if such connectivity is provided, to a test order in a Laboratory Information System (LIS), Healthcare Information System (HIS) or Electronic Medical Record (EMR), to see if neutrophil sub-categorization was requested. Similarly, consistent reporting may facilitate troubleshooting if human review of a particular result is necessary, e.g., potentially eliminating steps like determining which mode the analyzer was run in, or which reporting format was used. In this way, if the less-complicated neutrophil count meets any pre-set and local reliability criteria, that count can be released or auto-released (e.g., released by the analyzer and/or associated computing devices, without human user intervention) even if there is some complication with determining sub-populations of neutrophils, assuming that the sub-population characterization is not needed for a particular sample.

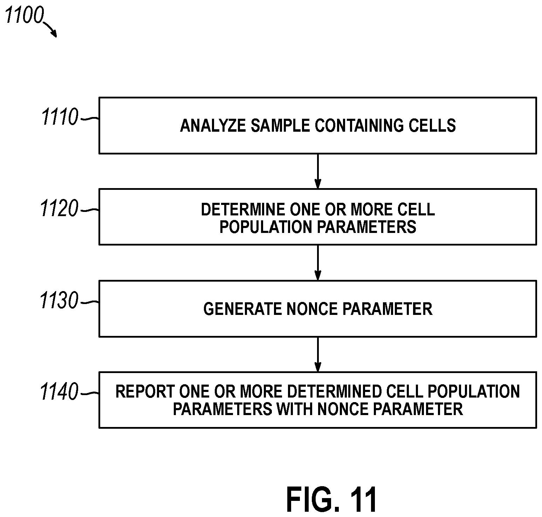

As mentioned above and shown in FIG. 11, one aspect of the present disclosure is the use of a nonce parameter to clarify and/or complete a report of laboratory analysis reports. In this regard, a method for reporting analytical results 1100 may comprise analyzing a sample containing cells. Blood has been used as a consistent example in this disclosure, however, commercially available hematology analyzers are often able to process other, non-blood body fluids which may contain cells, including, without limitation, synovial fluid, cerebrospinal fluid, pleural fluid, and the like, as well as suspensions of cells taken from other kinds of samples, such as sputum, wound drainage, pus, etc. Similarly, the processes and systems described herein may also find application in other kinds of analyzers, such as urinalysis machines and cellular imaging devices, without regard to whether they are intended to or capable of analyzing blood samples. A method for reporting analytical results 1100 may comprise determining one or more cell population parameters 1120. A method for reporting analytical results 1120 may comprise generating a nonce parameter 1130. The nonce parameter may be a parameter which has no particular significance apart from providing context or supporting information for one or more of the determined cell population parameters. For example, mNE may not be clinically significant in many contexts, and may not be requested when an EGC enumeration is requested (individually or as part of a routine differential). However, mNE may be routinely reported with EGC as a nonce parameter to provide context which helps a user understand the relationship between the reported EGC and NE parameters. In this regard, and as described above, mNE may be calculated (or determined), e.g., by subtracting EGCs from NEs. A method for reporting analytical results 1100 may comprise reporting the one or more determined cell population parameters with the nonce parameter 1140. As described above, the visual representations, placement, and labels for the determined cell population parameter(s) and the nonce parameter may further be indicative of the relationship between the cell population parameter(s) and other reported values.

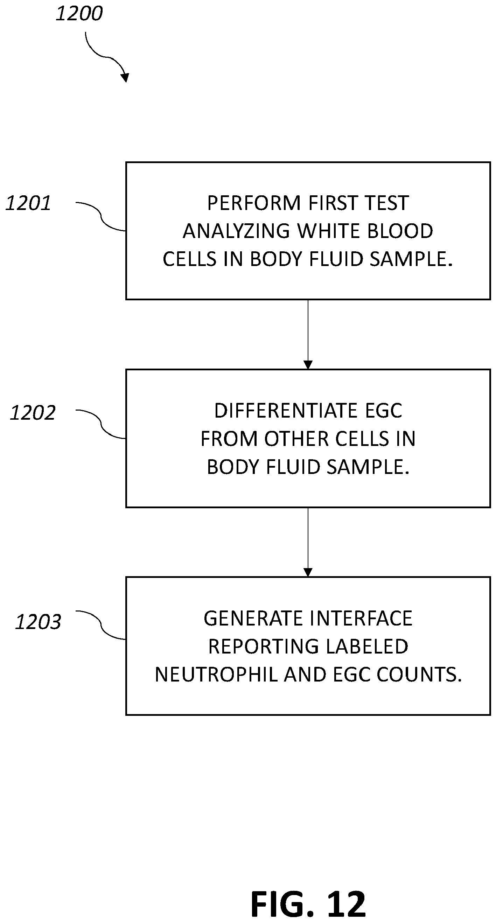

As mentioned above, another aspect of the present disclosure features the use of interfaces which clarify the results of EGC differentiation. In this regard, and as shown in FIG. 12, a method for performing and providing results of early granulated cell (EGC) differentiation 1200 may be provided. Such a method may comprise performing 1201 a first test analyzing white blood cells in a first body fluid sample. Such a method may also comprise differentiating 1202 EGCs from other cell types in the first body fluid sample based on at least one out of a group. This group may consist of granularity, nuclear lobularity, and cell surface structure. In some such methods, after performance 1201 of the first test, the method may comprise generating 1203 an interface reporting one or more results of the first test. In some such methods, this interface may comprise a labeled neutrophil count and a labeled EGC count.

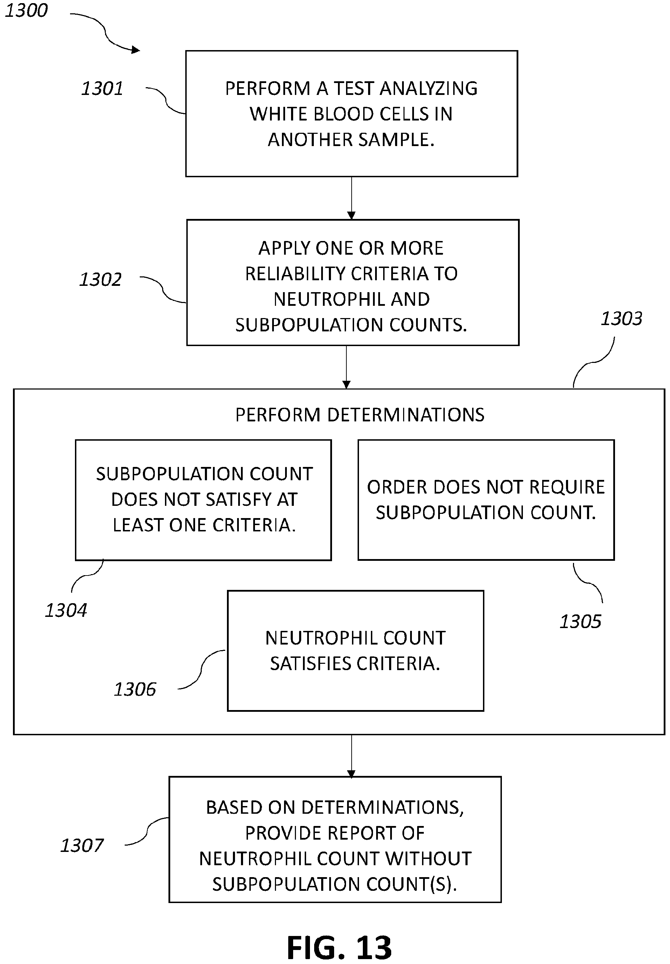

In some aspects, an interface such as generated in a method as described in the context of FIG. 12 may provide additional information. For example, in some embodiments, the labeled neutrophil count from such an interface may comprise counts for a plurality of subpopulations of neutrophils, such as EGC and mature neutrophils, and the interface may comprise a labeled count for each of those subpopulations. Additionally, in some aspects, a method 1300 which comprises generating such an interface may further comprise performing 1301 another test (e.g., a third test, to differentiate from the original test and any intervening tests) analyzing white blood cells in another (e.g., a third) body fluid sample, and applying 1302 one or more reliability criteria to a neutrophil count determined in the third test and at least one neutrophil subpopulation count comprised by the neutrophil count. In some embodiments, such a method 1300 may also comprise performing 1303 a set of determinations. These determinations may comprise determining 1304 that at least one neutrophil subpopulation count comprised by the neutrophil count does not satisfy at least one of the one or more reliability criteria, determining 1305 that an order corresponding to the third test does not require counts of neutrophil subpopulation, and determining 1306 that the neutrophil count satisfies all reliability criteria applied to it. Then, once these determinations 1303 have been made, in some embodiments a method as illustrated in FIG. 13 may continue with, based on the set of determinations, providing 1307 a report including the neutrophil count, but not including counts for neutrophil subpopulations.

The above data analysis of the samples collected demonstrates that the present specification has high levels of correlation, sensitivity and specificity in comparison to the manual differential inspection of the samples. Novel and non-obvious reporting processes further make the data analysis easier for a human user to understand and interpret.

In this disclosure, methods and systems were disclosed that can improve the diagnostic value of automated blood cell enumeration. In particular, aspects of this disclosure enable the automated identification and enumeration of EGCs in blood cell samples that can be significant for the detection and treatment of various conditions of infection. The disclosed methods and systems yield substantial improvements in cost effectiveness and efficiency over current methods and systems and can lead to significant improvements in the analysis of particle analyzer data.

The foregoing description has been presented for purposes of illustration and explanation. It is not intended to be exhaustive or to limit the invention to the precise form disclosed, wherein the scope of the invention is defined by the appended set of claims. The description is intended to explain the principles of the disclosure and its practical application to thereby enable others skilled in the art to best utilize the disclosure in various embodiments and various modifications as are suited to the particular use contemplated.

## Claims

1. A method for performing and providing results of early granulated cell (EGC) differentiation comprising:
a) performing a first test analyzing white blood cells in a first body fluid sample;
b) differentiating EGCs from other cell types in the first body fluid sample based on at least one out of a group, the group consisting of granularity, nuclear lobularity, and cell surface structure; and
c) generating an interface reporting one or more results of the first test, wherein the interface reporting one or more results of the first test comprises:
i) a labeled neutrophil count; and
ii) a labeled EGC count.

2. The method of claim 1, wherein:
a) the method comprises:
i) performing a second test analyzing white blood cells in a second body fluid sample; and
ii) generating an interface reporting one or more results of the second test, wherein the interface reporting one or more results of the second test comprises:
A) a labeled neutrophil count; and
B) a labeled EGC count;
b) the first test is run in a first mode, and the second test is run in a second mode; and
c) the interface reporting one or more results of the first test and the interface reporting one or more results of the second test use consistent labels for their respective neutrophil and EGC counts.

3. The method of claim 2,
wherein the first test is performed using a first analyzer, and the second test is performed using a second analyzer, and/or
wherein the first test is a five part differential, and the second test is a six part differential.

4. The method of any of claims 1-3, wherein:
a) the labeled neutrophil count from the interface reporting one or more results of the first test comprises counts for a plurality of subpopulations of neutrophils;
b) the interface reporting one or more results of the first test comprises a labeled count for each subpopulation of the plurality of subpopulations of neutrophils; and
c) the plurality of subpopulations of neutrophils comprises:
i) EGC; and
ii) mature neutrophils.

5. The method of claim 4, wherein:
a) the subpopulation of mature neutrophils comprises a plurality of sub-subpopulations; and
b) the plurality of sub-subpopulations comprises bands, degranulated cells and aged neutrophils.

6. The method of any of claims 4-5, wherein the labeled count for each subpopulation from the plurality of subpopulations of neutrophils is:
i) displayed proximate the labeled neutrophil count in the interface reporting one or more results of the first test; and
ii) indented at a first level relative to the labeled neutrophil count.

7. The method of any of claims 4-6 wherein, for each subpopulation comprising sub-subpopulations:
a) the interface reporting one or more results of the first test provides a labeled count for each of the sub-subpopulations; and
b) each of the sub-subpopulations is indented at a second level relative to the labeled neutrophil count.

8. The method of any of claims 6-7, wherein the interface reporting one or more results of the first test comprises a label relating the labeled neutrophil count to the labeled counts for the subpopulations of neutrophils.

9. The method of any of claims 4-8, wherein the method comprises:
a) performing a third test analyzing white blood cells in a third body fluid sample;
b) applying one or more reliability criteria to:
i) a neutrophil count determined in the third test;
ii) at least one neutrophil subpopulation count comprised by the neutrophil count;
c) performing a set of determinations comprising:
i) determining that at least one neutrophil subpopulation count comprised by the neutrophil count does not satisfy at least one of the one or more reliability criteria;
ii) determining that an order corresponding to the third test does not require counts of neutrophil subpopulations; and
iii) determining that the neutrophil count satisfies all reliability criteria applied to it; and
d) based on the set of determinations, providing a report including the neutrophil count, but not including counts for neutrophil subpopulations.

10. The method of claim 9, wherein determining that the order corresponding to the third test does not require counts of neutrophil subpopulations comprises retrieving the order corresponding to the third test from at least one of a group, the group consisting of:
a) a laboratory information system (LIS);
b) a healthcare information system (HIS); and
c) an electronic medical record system (EMR).

11. The method of any of claims 1-10, wherein:
a) the first test is performed pursuant to a test order;
b) generating the interface reporting one or more results of the first test comprises:
i) generating a parameter specified by the test order;
ii) generating a nonce parameter that:
A) provides context for the parameter specified by the test order; and
B) is not specified by the test order.

12. The method of claim 11, wherein:
a) the parameter specified by the test order is EGC count; and
b) the nonce parameter is mature neutrophil count.

13. A computer readable medium having stored thereon instructions for performing a method as claimed in any of claims 1-12.

14. A system comprising one or more analyzers configured with instructions stored on a computer readable medium to perform a method as claimed in any of claims 1-12.

15. A system as claimed in claim 14, wherein:
a) the one or more analyzers comprises:
i) a solution dispenser adapted to funnel the first body fluid sample into a flow cell (108);
ii) one or more energy sources (112) and associated sensors (114) positioned substantially transversely to the flow cell (108); and
iii) a signal processor (118) adapted to process signal pulses from the sensor (114) associated with the one or more energy sources (112); and
b) the sensors (114) associated with the one or more energy sources (112) are adapted to generate signal pulses based at least in part on light measurements comprising low angle light scatter (LALS) measurements.

## Patentansprüche

1. Verfahren zum Durchführen einer Differenzierung von Frühformen granulierter Zellen (early granulated cell, EGC) und Bereitstellen von Ergebnissen daraus, umfassend:
a) Durchführen einer ersten Untersuchung zur Analyse weißer Blutzellen in einer ersten Körperflüssigkeitsprobe;
b) Unterscheiden von EGC von anderen Zellarten in der ersten Körperflüssigkeitsprobe anhand von mindestens einem Element aus einer Gruppe, wobei die Gruppe aus Granularität, Lobularität des Kerns und Zelloberflächenstruktur besteht, und
c) Erzeugen einer Oberfläche, die ein oder mehrere Ergebnisse der ersten Untersuchung liefert, wobei die Oberfläche, die ein oder mehrere Ergebnisse der ersten Untersuchung liefert, Folgendes umfasst:
i) eine markierte Neutrophilenzahl; und
ii) eine markierte EGC-Zahl.

2. Verfahren nach Anspruch 1, wobei:
a) das Verfahren Folgendes umfasst:
i) Durchführen einer zweiten Untersuchung zur Analyse weißer Blutzellen in einer zweiten Körperflüssigkeitsprobe; und
ii) Erzeugen einer Oberfläche, die ein oder mehrere Ergebnisse der zweiten Untersuchung liefert, wobei die Oberfläche, die ein oder mehrere Ergebnisse der zweiten Untersuchung liefert, Folgendes umfasst:
A) eine markierte Neutrophilenzahl; und
B) eine markierte EGC-Zahl;
b) die erste Untersuchung in einem ersten Modus durchgeführt wird und die zweite Untersuchung in einem zweiten Modus durchgeführt wird; und
c) die Oberfläche, die ein oder mehrere Ergebnisse der ersten Untersuchung liefert, und die Oberfläche, die ein oder mehrere Ergebnisse der zweiten Untersuchung liefert, übereinstimmende Markierungen für die Neutrophilenzahl beziehungsweise EGC-Zahl nutzt.

3. Verfahren nach Anspruch 2,
wobei die erste Untersuchung unter Verwendung eines ersten Analysegeräts durchgeführt wird und die zweite Untersuchung unter Verwendung eines zweiten Analysegeräts durchgeführt wird und/oder
wobei die erste Untersuchung eine fünfteilige Differenzierungsuntersuchung ist und die zweite Untersuchung eine sechsteilige Differenzierungsuntersuchung ist.

4. Verfahren nach einem der Ansprüche 1 bis 3, wobei:
a) die markierte Neutrophilenzahl von der Oberfläche, die ein oder mehrere Ergebnisse der ersten Untersuchung liefert, eine Zählung für mehrere Untergruppen von Neutrophilen umfasst;
b) die Oberfläche, die ein oder mehrere Ergebnisse der ersten Untersuchung liefert, eine markierte Zahl für jede Untergruppe der mehreren Untergruppen von Neutrophilen umfasst; und
c) die mehreren Untergruppen von Neutrophilen Folgendes umfassen:
i) EGC; und
ii) reife Neutrophilen.

5. Verfahren nach Anspruch 4, wobei:
a) die Untergruppe reifer Neutrophilen mehrere Untergruppen umfasst; und
b) die mehreren Untergruppen Bänder, degranulierte Zellen und alte Neutrophilen umfassen.

6. Verfahren nach einem der Ansprüche 4 bis 5, wobei die markierte Zahl für jede Untergruppe der mehreren Untergruppen von Neutrophilen:
i) in der Nähe der markierten Neutrophilenzahl auf der Oberfläche angezeigt wird, die ein oder mehrere Ergebnisse der ersten Untersuchung liefert; und
ii) bezogen auf die markierte Neutrophilenzahl um eine erste Stufe eingerückt ist.

7. Verfahren nach einem der Ansprüche 4 bis 6, wobei für jede Untergruppe, die Untergruppen umfasst:
a) die Oberfläche, die ein oder mehrere Ergebnisse der ersten Untersuchung liefert, eine markierte Zahl für jede der Untergruppen bereitstellt; und
b) jede der Untergruppen bezogen auf die markierte Neutrophilenzahl um eine zweite Stufe eingerückt ist.

8. Verfahren nach einem der Ansprüche 6 bis 7, wobei die Oberfläche, die ein oder mehrere Ergebnisse der ersten Untersuchung liefert, eine Markierung umfasst, mit der die markierte Neutrophilenzahl zu den markierten Zahlen für die Untergruppen von Neutrophilen in Bezug gesetzt wird.

9. Verfahren nach einem der Ansprüche 4 bis 8, wobei das Verfahren Folgendes umfasst:
a) Durchführen einer dritten Untersuchung zur Analyse weißer Blutzellen in einer dritten Körperflüssigkeitsprobe;
b) Anwenden von einem oder mehreren Zuverlässigkeitskriterien auf:
i) eine Neutrophilenzahl, die in der dritten Untersuchung ermittelt wurde;
ii) mindestens eine Neutrophilenuntergruppenzahl, die in der Neutrophilenzahl enthalten ist;
c) Durchführen von einer Reihe von Feststellungen, umfassend:
i) Feststellen, dass mindestens eine Neutrophilenuntergruppenzahl, die in der Neutrophilenzahl enthalten ist, mindestens eins von dem einen oder den mehreren Zuverlässigkeitskriterien nicht erfüllt;
ii) Feststellen, dass bei einem Auftrag, der der dritten Untersuchung entspricht, keine Zählung von Neutrophilenuntergruppen erforderlich ist; und
iii) Feststellen, dass die Neutrophilenzahl sämtliche darauf angewendeten Zuverlässigkeitskriterien erfüllt;
und
d) auf Grundlage der Reihe von Feststellungen Bereitstellen eines Berichts, der die Neutrophilenzahl umfasst, jedoch keine Zahlen für Neutrophilenuntergruppen umfasst.

10. Verfahren nach Anspruch 9, wobei das Feststellen, dass bei dem Auftrag, der der dritten Untersuchung entspricht, keine Zählung von Neutrophilenuntergruppen erforderlich ist, ein Beziehen des Auftrags, der der dritten Untersuchung entspricht, von mindestens einem Element aus einer Gruppe umfasst, wobei die Gruppe aus Folgendem besteht:
a) einem Laborinformationssystem (laboratory information system, LIS);
b) einem Gesundheitsinformationssystem (healthcare information system, HIS); und
c) einem elektronischen Patientenaktensystem (electronic medical record system, EMR).

11. Verfahren nach einem der Ansprüche 1 bis 10, wobei:
a) die erste Untersuchung gemäß einem Untersuchungsauftrag durchgeführt wird;
b) das Erzeugen der Oberfläche, die ein oder mehrere Ergebnisse der ersten Untersuchung liefert, Folgendes umfasst:
i) Erzeugen eines Parameters, der in dem Untersuchungsauftrag vorgegeben ist;
ii) Erzeugen eines Ad-hoc-Parameters, der:
A) Kontext zu dem Parameter liefert, der in dem Untersuchungsauftrag vorgegeben ist; und
B) nicht in dem Untersuchungsauftrag vorgegeben ist.

12. Verfahren nach Anspruch 11, wobei:
a) der Parameter, der in dem Untersuchungsauftrag vorgegeben ist, die EGC-Zahl ist; und
b) der Ad-hoc-Parameter die Zahl reifer Neutrophilen ist.

13. Computerlesbares Medium, auf dem Anweisungen zum Durchführen eines Verfahrens nach einem der Ansprüche 1 bis 12 gespeichert sind.

14. System, umfassend ein oder mehrere Analysegeräte, die mit Anweisungen, die auf einem computerlesbaren Medium gespeichert sind, so eingerichtet sind, dass sie ein Verfahren nach einem der Ansprüche 1 bis 12 durchführen.

15. System nach Anspruch 14, wobei:
a) das eine oder die mehreren Analysegeräte Folgendes umfassen:
i) ein Lösungsröhrchen, das so ausgelegt ist, dass es die erste Körperflüssigkeitsprobe in eine Durchflusszelle (108) leitet;
ii) eine oder mehrere Energiequellen (112) und zugehörige Sensoren (114), die im Wesentlichen quer zur Durchflusszelle (108) platziert sind; und
iii) einen Signalprozessor (118), der so ausgelegt ist, dass er Signalimpulse von dem Sensor (114) verarbeitet, der der einen oder den mehreren Energiequellen (112) zugehörig ist;
und
b) die Sensoren (114), die der einen oder den mehreren Energiequellen (112) zugehörig sind, so ausgelegt sind, dass sie die Signalimpulse anhand von zumindest teilweise Lichtmessungen erzeugen, die Vorwärtstreulichtmessungen (low angle light scatter, LALS) umfassen.

## Revendications

1. Procédé pour effectuer et fournir des résultats de différenciation de cellules granulées (early granulated cell, EGC) comprenant les étapes consistant à :
a) effectuer un premier test analysant les cellules sanguines blanches dans un premier échantillon de fluide corporel ;
b) différencier les EGC d'autres types cellulaires dans le premier échantillon de fluide corporel sur la base d'au moins un d'un groupe, le groupe étant constitué par une structure de granularité, de lobularité nucléaire et de surface cellulaire ; et
c) produire une interface rapportant un ou plusieurs résultats du premier test, l'interface rapportant un ou plusieurs résultats du premier test comprenant :
i) un nombre de neutrophiles marqués ; et
ii) un nombre d'EGC marquées.

2. Procédé selon la revendication 1, dans lequel :
a) le procédé comprend les étapes consistant à :
i) effectuer un second test analysant les cellules sanguines blanches dans un second échantillon de fluide corporel ; et
ii) produire une interface rapportant un ou plusieurs résultats du second test, l'interface rapportant un ou plusieurs résultats du second test comprenant :
A) un nombre de neutrophiles marqués ; et
B) un nombre d'EGC marquées ;
b) le premier test est effectué dans un premier mode et le second test est effectué dans un second mode ; et
c) l'interface rapportant un ou plusieurs résultats du premier test et l'interface rapportant un ou plusieurs résultats du second test utilisent des marqueurs consistants pour leurs nombres de neutrophiles et d'EGC respectifs.

3. Procédé selon la revendication 2,
dans lequel le premier test est effectué en utilisant un premier analyseur et le second test est effectué en utilisant un second analyseur et/ou
le premier test est un différentiel à cinq parties et le second test est un différentiel à six parties.

4. Procédé selon l'une quelconque des revendications 1 à 3, dans lequel :
a) le nombre de neutrophiles marqués de l'interface rapportant un ou plusieurs résultats du premier test comprend les nombres pour une pluralité de sous-populations de neutrophiles ;
b) l'interface rapportant un ou plusieurs résultats du premier test comprend un nombre marqué pour chaque sous-population de la pluralité de sous-populations de neutrophiles ; et
c) la pluralité de sous-populations de neutrophiles comprend :
i) des EGC ; et
ii) des neutrophiles matures.

5. Procédé selon la revendication 4, dans lequel :
a) la sous-population de neutrophiles matures comprend une pluralité de sous-populations ; et
a) la pluralité de sous-populations comprend des bandes, des cellules dégranulées et des neutrophiles âgés.

6. Procédé selon l'une quelconque des revendications 4 à 5, dans lequel le nombre marqué pour chaque sous-population de la pluralité de sous-populations de neutrophiles est :
i) affiché près du nombre de neutrophiles marqués dans l'interface rapportant un ou plusieurs résultats du premier test ; et
ii) découpé à un premier niveau par rapport au nombre de neutrophiles marqués.

7. Procédé selon l'une quelconque des revendications 4 à 6 dans lequel, pour chaque sous-population comprenant les sous-populations :
a) l'interface rapportant un ou plusieurs résultats du premier test fournit un nombre marqué pour chacune des sous-populations ; et
b) chacune des sous-populations est découpée à un second niveau par rapport au nombre de neutrophiles marqués.

8. Procédé selon l'une quelconque des revendications 6 à 7, dans lequel l'interface rapportant un ou plusieurs résultats du premier test comprend un marqueur associant le nombre de neutrophiles marqués aux nombres marqués pour les sous-populations de neutrophiles.

9. Procédé selon l'une quelconque des revendications 4 à 8, dans lequel le procédé comprend les étapes consistant à :
a) effectuer un troisième test analysant les cellules sanguines blanches dans un troisième échantillon de fluide corporel ;
b) appliquer un ou plusieurs critères de fiabilité à :
i) un nombre de neutrophiles déterminé dans le troisième test ;
ii) au moins un nombre de sous-populations de neutrophiles compris par le nombre de neutrophiles ;
c) effectuer un ensemble de déterminations comprenant :
i) la détermination qu'au moins un nombre de sous-populations de neutrophiles compris par le nombre de neutrophiles ne satisfait pas au moins un des un ou plusieurs critères de fiabilité ;
ii) la détermination qu'un ordre correspondant au troisième test ne requiert pas les nombres de sous-populations de neutrophiles ; et
iii) la détermination que le nombre de neutrophiles satisfait tous les critères de fiabilité appliqués à celui-ci ;
et
d) sur la base de l'ensemble de déterminations, la fourniture d'un rapport comprenant le nombre de neutrophiles, mais ne comprenant pas les nombres pour les sous-populations de neutrophiles.

10. Procédé selon la revendication 9, dans lequel la détermination que l'ordre correspondant au troisième test ne requiert pas les nombres de sous-populations de neutrophiles comprend de récupérer l'ordre correspondant au troisième test d'au moins un d'un groupe, le groupe étant constitué par :
a) un système d'informations de laboratoire (laboratory information system, LIS) ;
b) un système d'informations de soins de santé (healthcare information system, HIS) ; et
c) un système d'enregistrement médical électronique (electronic médical record system, EMR).

11. Procédé selon l'une quelconque des revendications 1 à 10, dans lequel :
a) le premier test est effectué en poursuivant un ordre de test ;
b) la production de l'interface rapportant un ou plusieurs résultats du premier test comprend :
i) la production d'un paramètre spécifié par l'ordre de test ;
ii) la production d'un paramètre nonce qui :
A) fournit un contexte pour le paramètre spécifié par l'ordre de test ; et
B) n'est pas spécifié par l'ordre de test.

12. Procédé selon la revendication 11, dans lequel :
a) le paramètre spécifié par l'ordre de test est le nombre d'EGC ; et
b) le paramètre nonce est le nombre de neutrophiles matures.

13. Support lisible sur ordinateur ayant stockées dessus les instructions pour effectuer un procédé tel que revendiqué dans l'une quelconque des revendications 1 à 12.

14. Système comprenant un ou plusieurs analyseurs configurés avec des instructions stockées sur un support lisible sur ordinateur pour effectuer un procédé tel que revendiqué dans l'une quelconque des revendications 1 à 12.

15. Système selon la revendication 14, dans lequel :
a) les un ou plusieurs analyseurs comprennent :
i) un distributeur de solution adapté à un entonnoir du premier échantillon de fluide corporel dans une cellule d'écoulement (108) ;
ii) une ou plusieurs sources d'énergie (112) et les capteurs associés (114) positionnés essentiellement de manière transversale à la cellule d'écoulement (108) ; et
iii) un processeur de signal (118) adapté pour traiter les impulsions de signal du capteur (114) associé avec les une ou plusieurs sources d'énergie (112) ;
et
b) les capteurs (114) associés avec les une ou plusieurs sources d'énergie (112) sont adaptés pour produire les impulsions de signal basées au moins en partie sur les mesures de lumière comprenant les mesures de diffraction de lumière à angle aigu (low anglelight scatter, LALS).
